# EUROPEAN PATENT APPLICATION

(11) **EP 4 528 691 A1**
(43) Date of publication of application: **26.03.2025**
(21) Application number: 24191146.0
(22) Date of filing: 26.07.2024
(51) Int. Cl.: G08G 5/00, G06V 20/58

(54) **AIRBORNE OBJECT DETECTION SYSTEMS FOR AIRCRAFT**

(30) Priority: 25.09.2023 US 202318372511
(71) Applicant: ROSEMOUNT AEROSPACE INC., Burnsville, MN 55306-4898 (US)
(72) Inventor: NASLUND, Brian B., Burnsville, MN (US); SANDU, Irina R., Wilsonville, OR (US); EUCKEN, Douglas, Burnsville, MN (US); SEGAL, Juan Martin, Cedar Rapids, IA (US)
(74) Representative: Dehns

(57) **Abstract**

An airborne object detection system (103) can include one or more imaging devices (110) configured to be disposed on an aircraft and to produce imaging data of one or more portions of an environment surrounding the aircraft, and an object detection system (103) operatively connected to the one or more imaging devices (110) to receive the imaging data. The object detection system (103) can be configured to determine whether there are one or more collision risk objects in the imaging data that will or are likely to collide with the aircraft based on the imaging data. The object detection system (103) can be configured to determine a collision location on the aircraft that the one or more collision risk objects will or are likely to collide with.

## Description

### FIELD

This disclosure relates to airborne object detection systems for aircraft.

### BACKGROUND

The danger of mid-air collisions with birds is ever present for aircraft and the damage caused can be substantial enough to prevent continued flight, e.g., as in the case of U.S. Airways flight 1549 (known as the "Miracle on the Hudson"). Additionally, the threat is now increasing with the proliferation of drones operated near airports and at altitudes frequented by commercial and GA aircraft. While systems for avoiding collisions with other aircraft are available and improving, the systems to avoid bird and drone strikes remain heavily dependent on the pilot's perception and ability to react.

Such conventional methods and systems have generally been considered satisfactory for their intended purpose. However, there is still a need in the art for improvements. The present disclosure provides a solution for this need.

### SUMMARY

An airborne object detection system can include one or more imaging devices configured to be disposed on an aircraft and to produce imaging data of one or more portions of an environment surrounding the aircraft, and an object detection system operatively connected to the one or more imaging devices to receive the imaging data. The object detection system can be configured to determine whether there are one or more collision risk objects in the imaging data that will or are likely to collide with the aircraft based on the imaging data. The object detection system can be configured to determine a collision location on the aircraft that the one or more collision risk objects will or are likely to collide with.

The object detection system can be configured to determine an avoidance maneuver and/or route to avoid collision with the one or more collision risk objects. The object detection system can be configured to determine that a collision is unavoidable, and determine a first hazard rating of the collision location on the aircraft. The object detection system can be configured to determine a risk reduction maneuver that moves the collision location to a second area on the aircraft having a second hazard rating being less hazardous than the first hazard rating to reduce risk to the aircraft resulting from a collision with the collision risk object.

The object detection system can be configured to reference hazard zone data including a plurality of defined hazard zones each having a respective hazard rating to determine the risk reduction maneuver to maneuver the aircraft to move the collision location to a hazard zone having a lower or lowest risk within a remaining time before collision. The object detection system can include a moving object detection module configured to determine whether there are one or more collision risk objects.

The object detection system can include a classification module configured to determine what the one or more collision risk objects are based on the image data and to output one or more object classifications associated with the one or more collision risk objects. The object detection system can include a directionality module configured to determine a motion direction of the one or more collision risk objects based on the image data and to output motion data associated with the one or more collision risk objects.

The object detection system can include a threat detection module operatively connected to the directionality module to receive the motion data and the classification module to receive the one or more object classifications. The threat detection module can be configured to determine whether a collision will occur and/or a time of collision and to output collision data. The system can include a maneuver module configured to output an avoidance maneuver based on the motion data and/or the collision data to avoid collision with or modify the collision location of the collision risk object. The system can include a selector module configured to select between the maneuver module and/or a navigation module to output a control signal to an autopilot and/or flight control system.

In certain embodiments, the object detection system can be configured to change a processing time based on one or more risk factors. The one or more risk factors can include at least one of altitude, speed, weather, and environment type. For example, the object detection system is configured to elongate processing time with a lowering risk.

In certain embodiments, the object detection system can be configured to deactivate above a threshold altitude. In certain embodiments, the threshold altitude can be above a normal maximum for birds and/or drones (e.g., above about 10,000 feet AGL). In certain embodiments, the object detection system can be configured to annunciate to a cockpit annunciator the existence of a collision risk object and/or the object classification and/or the collision location of the one or more collision risk objects.

In certain embodiments, the object detection system can include artificial intelligence and/or machine learning (e.g., for processing the imaging data, e.g., using optical flow vectorization). The object detection system can include a neural network, for example.

In accordance with at least one aspect of this disclosure, a non-transitory computer readable medium comprising computer executable instructions configured to cause a computer to perform a method. The method can include determining whether there are one or more collision risk objects in the imaging data that will or are likely to collide with the aircraft based on the imaging data. The method can also include determining a collision location on the aircraft that the one or more collision risk objects will or are likely to collide with. The method can include any other method(s) and/or portion(s) thereof (e.g., associated with one or more functions of system disclosed herein).

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of an embodiment of a system in accordance with this disclosure.
Fig. 2 is a decision flow diagram of an embodiment of a method in accordance with this disclosure.
Fig. 3 is a schematic view of an embodiment of a system timing diagram in accordance with this disclosure.
Fig. 4 is an image depicting an embodiment of optical flow vectorization of an image.
Fig. 5 is an image depicting an embodiment of moving object identification and focusing on an object using optical flow vectorization for object classification.

### DETAILED DESCRIPTION

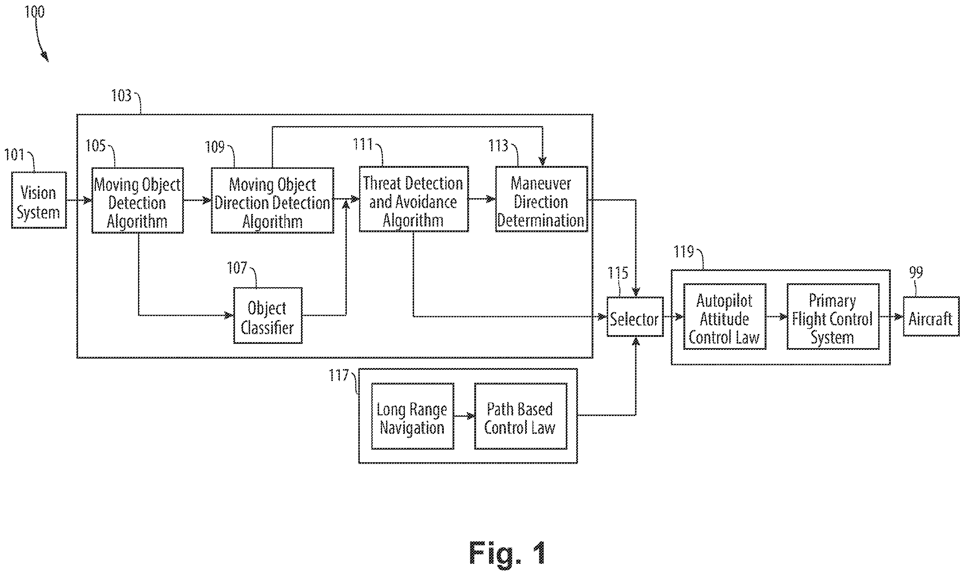

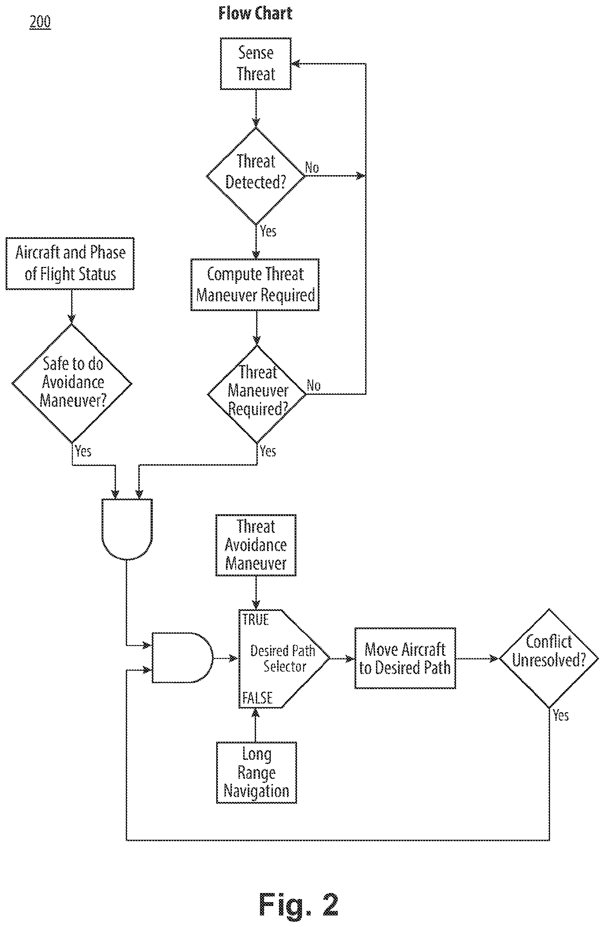

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other views, embodiments, and/or aspects of this disclosure are illustrated in Figs. 2-5.

Referring to Fig. 1, an airborne object detection system 100 can include one or more imaging devices 101 configured to be disposed on an aircraft 99 and to produce imaging data (e.g., one or more images) of one or more portions of an environment surrounding the aircraft (e.g., a forward looking field of view in a direction of motion). The system 100 can include an object detection system 103 operatively connected to the one or more imaging devices 101 to receive the imaging data. The object detection system 103 can be configured to determine whether there are one or more collision risk objects (e.g., a bird, a drone, another aircraft) in the imaging data that will or are likely to collide with the aircraft based on the imaging data. The object detection system 103 can be configured to determine a collision location (e.g., a wing, an engine, a fuselage, a tail, a control surface, a probe, an air data instrument, landing gear) on the aircraft that the one or more collision risk objects will or are likely to collide with.

In certain embodiments, the object detection system 103 can be configured to determine an avoidance maneuver and/or route to avoid collision with the one or more collision risk objects. The object detection system 103 can be configured to determine that a collision is unavoidable, and determine a first hazard rating of the collision location on the aircraft. The object detection system 103 can be configured to determine a risk reduction maneuver that moves the collision location to a second area on the aircraft having a second hazard rating being less hazardous than the first hazard rating to reduce risk to the aircraft resulting from a collision with the collision risk object.

The object detection system 103 can be configured to reference hazard zone data (e.g., stored in a local memory) including a plurality of defined hazard zones (e.g., a root wing zone, a wind tip zone, an engine zone, etc.) each having a respective hazard rating to determine the risk reduction maneuver to maneuver the aircraft to move the collision location to a hazard zone having a lower or lowest risk within a remaining time before collision.

As shown in Fig. 1, the object detection system 103 can include a moving object detection module 105 configured to determine whether there are one or more collision risk objects. The object detection system 103 can include a classification module 107 configured to determine what the one or more collision risk objects are based on the image data and to output one or more object classifications associated with the one or more collision risk objects. The object detection system 103 can include a directionality module 109 configured to determine a motion direction of the one or more collision risk objects based on the image data and to output motion data associated with the one or more collision risk objects.

The object detection system 103 can include a threat detection module 111 operatively connected to the directionality module 109 to receive the motion data and the classification module 107 to receive the one or more object classifications. The threat detection module 111 can be configured to determine whether a collision will occur and/or a time of collision and to output collision data. The system 100 (e.g., the object detection module 103 as shown) can include a maneuver module 113 configured to output an avoidance maneuver based on the motion data and/or the collision data to avoid collision with or modify the collision location of the collision risk object. The system 100 can include a selector module 115 configured to select between the maneuver module 113 and/or a navigation module 117 to output a control signal to an autopilot and/or flight control system 119.

Referring additionally to Fig. 2, an embodiment of a method 200 is shown (e.g., an autonomous aircraft maneuver method). The method 200 can be implemented by system 100 as shown, and/or with any other suitable hardware and/or software modules. The method 200 can include any other suitable method(s) and/or portion(s) thereof.

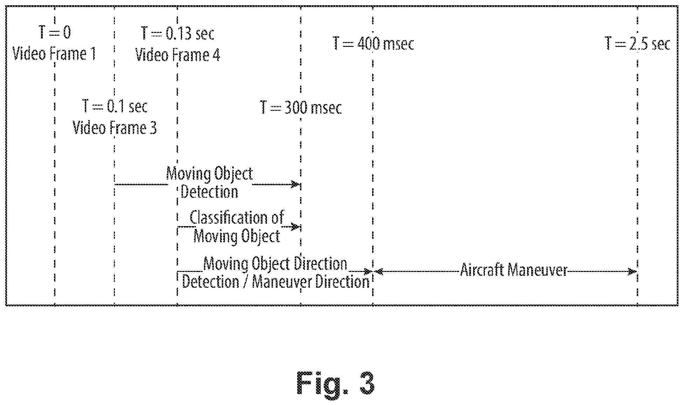

Referring additionally to Fig. 3, an embodiment of a timing diagram is shown indicating an example of processing times for moving object detection, classification, directionality detection, and maneuver calculation (e.g., totaling 400ms) before performing the aircraft maneuver. In certain embodiments, the object detection system 103 can be configured to change a processing time based on one or more risk factors. The one or more risk factors can include at least one of altitude, speed, weather, and environment type. For example, the object detection system 103 can be configured to elongate processing time with a lowering risk (e.g., where there is a low likelihood of bird strike or drone strike, allowing higher fidelity processing and/or decision making).

In certain embodiments, the object detection system 103 can be configured to deactivate above a threshold altitude. In certain embodiments, the threshold altitude can be above a normal maximum for birds and/or drones (e.g., above about 10,000 feet AGL). In certain embodiments, the object detection system 103 can be configured to annunciate to a cockpit annunciator the existence of a collision risk object and/or the object classification and/or the collision location of the one or more collision risk objects.

In certain embodiments, the object detection system 103 can include artificial intelligence and/or machine learning (e.g., AI/ML for processing the imaging data, e.g., using optical flow vectorization). The object detection system 103 can include a neural network, for example. The AI/ML can be trained to recognize birds, a type of bird, a probability of motion based on a type of bird, etc., to predict a likely path of the bird from the imaging data.

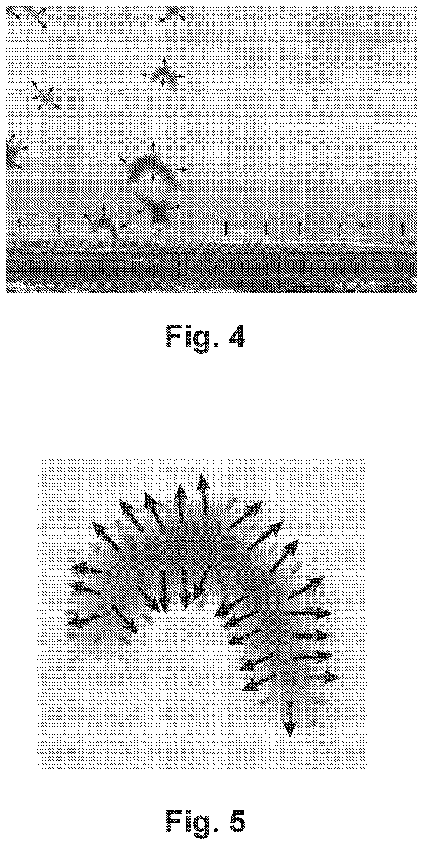

For example, as shown in Figs. 4 and 5, a moving object can be recognized in an optical flow vector where the direction of vectors is anomalous compared to normal vectors such as with the ground (e.g., which are always substantially vertical). The system 100 can focus on the moving objects and classify the moving object (e.g., as a bird as shown) and determine a path of motion of the moving object to generate an avoidance and/or risk reduction maneuver.

In accordance with at least one aspect of this disclosure, a non-transitory computer readable medium comprising computer executable instructions configured to cause a computer to perform a method. The method can include determining whether there are one or more collision risk objects in the imaging data that will or are likely to collide with the aircraft based on the imaging data. The method can also include determining a collision location on the aircraft that the one or more collision risk objects will or are likely to collide with. The method can include any other method(s) and/or portion(s) thereof (e.g., associated with one or more functions of system disclosed herein).

Certain embodiments can annunciate that there is an object moving, and annunciate that it will take action to avoid object. Certain embodiments can allow pilots to see that something is moving, and to manually make decisions. Certain embodiments can be configured to take action where the pilot cannot react fast enough.

Certain embodiments can be done processing within about 400ms so that the aircraft has enough time to execute a maneuver in a fast manner (e.g., where collision risk objects are close). Certain embodiments can of the system can be configured to allow more time to observe and calculate under certain circumstances (e.g., clear weather can reduce risk). In certain embodiments, the time bound can be airspeed dependent, altitude dependent, or dependent on any other suitable risk factors. Certain embodiments can be configured to control an aircraft throttle and to put the aircraft in a condition to perform a desired maneuver. Certain embodiments can include a manual override.

Certain embodiments can output images or regions of an image to be classified. For example, a moving object module can determine whether there are moving objects and can then send the regions of interest to the classification module and/or a directionality module. Certain embodiments can be connected to one or more imaging devices (e.g., multispectral, in one or more different aircraft locations).

Certain embodiments can output a vector map for determining a moving object. Certain embodiments can determine what the flying moving object is based on input image data. Certain embodiments can determine direction the object is moving, and whether there is a collision imminent and a time of likely collision.

Certain embodiments can determine an area on the aircraft where a collision can or will occur. Certain embodiments can have information about the aircraft shape and systems location to reference. Certain embodiments can utilize optical flow determination using any suitable processing type (e.g., AI/ML).

Certain embodiments can be supported by technology advancements in imaging systems which are increasingly capable of capturing, processing, and transmitting high resolution and low latency video data of the environment in front of an aircraft. Specifically, currently available Enhanced Vision Systems (EVS) can provide multi-spectral images from cameras mounted on the nose as well as additional exterior camera systems mounted on the vertical stabilizer, belly, and wing tips can provide a broad view of the external environment. This disclosure can also supported by advanced video analytics and computer vision algorithms, which may be supported by Artificial Intelligence and Machine Learning (AI/ML). Finally, embodiments of this disclosure can leverage modern Fly-By-Wire Flight Control Systems which are able to compute flight orientation and path and also drive required control changes to safely maneuver an aircraft around any bird(s) and annunciate the decision to take an evasive maneuver to the flight crew and other potentially affected aircraft systems. Certain embodiments can be configured to annunciate a determination of a collision, a type of collision, and/or where the collision occurred after collision to provide information to the pilots. Certain embodiments can operate within the airspace below 10,000 MSL and/or where the maximum airspeed is limited to 250kts.

The current state of the art relies on pilots to detect the presence of the airborne threat of birds to the aircraft and take appropriate avoidance maneuver. This detection is typically visual but may be supplemented by weather radar. With the speed at which an aircraft encounters the threat often the reaction time of the pilot does not allow any opportunity to significantly alter the aircraft flight path. This results in bird strikes which go unmitigated and pose a threat to aviation safety.

Certain embodiments can include an autonomous avian detection and avoidance system which can operate by using vision systems to detect birds, determining the likelihood of a collision, and autonomously driving the flight controls to mitigate the possible damage to the flight vehicle. Specifically, the system can use inputs from an Enhanced Vision System and other external cameras to detect and identify airborne objects. In order to support low latency requirements of the system, the camera sub-system can have high resolution and low latency output (e.g., about 2.5 seconds, 400ms for detection of colliding object, 2s for aircraft response from command initiation to execution, 100ms of margin). Certain embodiments of this disclosure can include input solely from the EVS or input from multiple cameras (EVS or traditional exterior).

The video frames from the camera system can be processed and analyzed to determine the presence of anomalies in the expected optical flow of visual features (e.g., discerning between expected features, e.g., urban scenes, clouds, etc., moving in subsequent frames and "anomalies" as objects coming towards, sideways, etc.), identify the non-cooperating flying object, its speed and direction, and its position relative to the aircraft's current flight path. Through the use of advanced analytics, including AI/ML, the identification of the bird can be done specifically for size and species. Using this information, the predictive analytics can provide a prediction of the likely response the bird or other object will have in response to the aircraft (e.g., based on species type).

After processing the likely position of the bird(s) or other object(s), the system can then determine whether an impact is likely on the current flight path. With high resolution imaging and models, it is possible to not just determine the likelihood of impact, but also where on the aircraft the impact would occur. Each area of the aircraft can be evaluated for risk associated with an impact, with areas such as the engine inlets and cockpit windscreen being examples of high-risk zones. A hazard rating can be assigned correlating to a level of risk of a particular zone, for example. Based on the calculation of impact probability, and the risk assessment of the impact zone, the system can then determine the most appropriate course of action, e.g., autonomously. This decision and maneuver can be constrained by at least one of (e.g., a plurality of or all of) a time to impact, speed and configuration of the aircraft, airframe stress loading, a size of a bird, single vs. multiple birds present, risk of the predicted and adjacent impact zones, and a risk to crew and passengers due to a possible impending maneuver.

If an avoidance maneuvering is possible, without over-stressing the airframe or risking the safety of the crew and passengers, then the system can annunciate its decision to perform a maneuver and then utilize Fly-By-Wire controls to direct appropriate control movements to move the aircraft. In an ideal case, the collision is avoided completely; however, maneuvering so that the impact is realized in a less hazardous zone would be preferred (e.g., a wing root and fuselage sections away from critical sensors would be less hazardous than the engine or windscreen). Additionally, the system can determine whether the bird or other object is not large enough to warrant avoidance maneuvers. Due to the low latency required from detection to action, the system can be designed and certified for autonomous action in order for it to be effective.

Embodiments can provide value in mitigating aircraft damage due to a bird strike, for example. The system can be intelligent so that it uses a risk-based approach to only drive maneuvers when critical zones of the aircraft are deemed to have a high probably of impact and the conflicting objects are large enough to cause damage. The system can be substantially based on existing aircraft systems such as EVS, External Video, and Fly-By-Wire; however, modifications may be made such as improving resolution and latency of imaging systems and improving processor performance for video analytics, AI/ML, and flight path computation/flight control input.

Embodiments can mitigate aircraft damage due to a bird strike leveraging existing equipment. Embodiments can monitor, consolidate, and analyze video data to identify conflicting objects. Embodiments can be configured for predicting conflicting object motion. Embodiments can be configured for determining whether and where on the aircraft a collision will occur. Embodiments can be configured for calculating the risk of impact. Embodiments can be configured for determining the optimized avoidance maneuver to mitigate the collision risk.

Traditional systems require manual avoidance through direct pilot engagement and rely on detection through the pilot's vision or weather radar input. While ground based systems are in development in an airport environment, no practical systems are known to be available for aircraft.

Embodiments can include any suitable computer hardware and/or software module(s) to perform any suitable function (e.g., as disclosed herein). As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

## Claims

1. An airborne object detection system, comprising:
one or more imaging devices (110) configured to be disposed on an aircraft and to produce imaging data of one or more portions of an environment surrounding the aircraft;
an object detection system (103) operatively connected to the one or more imaging devices (110) to receive the imaging data, wherein the object detection system (103) is configured to determine whether there are one or more collision risk objects in the imaging data that will or are likely to collide with the aircraft based on the imaging data, wherein the object detection system (103) is configured to determine a collision location on the aircraft that the one or more collision risk objects will or are likely to collide with.

2. The system of claim 1, wherein the object detection system (103) is configured to determine an avoidance maneuver and/or route to avoid collision with the one or more collision risk objects.

3. The system of claim 1, wherein the object detection system (103) is configured to:
determine that a collision is unavoidable; and
determine a first hazard rating of the collision location on the aircraft.

4. The system of claim 3, wherein the object detection system (103) is configured to determine a risk reduction maneuver that moves the collision location to a second area on the aircraft having a second hazard rating having a less hazardous than the first hazard rating to reduce risk to the aircraft resulting from a collision with the collision risk object, and optionally wherein the object detection system (103) is configured to reference hazard zone data including a plurality of defined hazard zones each having a respective hazard rating to determine the risk reduction maneuver to maneuver the aircraft to move the collision location to a hazard zone having a lower or lowest risk within a remaining time before collision.

5. The system of any preceding claim, wherein the object detection system (103) includes a moving object detection module configured to determine whether there are one or more collision risk objects, and optionally . wherein the object detection system (103) includes a classification module configured to determine what the one or more collision risk objects are based on the image data and to output one or more object classifications associated with the one or more collision risk objects.

6. The system of claim 5, wherein the object detection system (103) includes a directionality module configured to determine a motion direction of the one or more collision risk objects based on the image data and to output motion data associated with the one or more collision risk objects.

7. The system of claim 6, wherein the object detection system (103) includes a threat detection module operatively connected to the directionality module to receive the motion data and the classification module to receive the one or more object classifications, wherein the threat detection module is configured to determine whether a collision will occur and/or a time of collision and to output collision data.

8. The system of claim 7, wherein the system includes a maneuver module configured to output an avoidance maneuver based on the motion data and/or the collision data to avoid collision with or modify the collision location of the collision risk object.

9. The system of claim 8, wherein the object detection system (103) is configured to change a processing time based on one or more risk factors.

10. The system of claim 9, wherein the one or more risk factors include at least one of altitude, speed, weather, and environment type.

11. The system of claim 10, wherein the object detection system (103) is configured to elongate processing time with a lowering risk.

12. The system of claim 11, wherein the object detection system (103) is configured to deactivate above a threshold altitude, and optionally wherein the threshold altitude is above a normal maximum for birds and/or drones, and optionally wherein the object detection system (103) is configured to annunciate to a cockpit annunciator the existence of a collision risk object and/or the object classification and/or the collision location of the one or more collision risk objects, and optionally wherein the object detection system (103) includes a neural network..

13. The system of claim 8, wherein the system includes a selector module configured to select between the maneuver module and/or a navigation module to output a control signal to an autopilot and/or flight control system.

14. The system of any preceding claim, wherein the object detection system (103) includes artificial intelligence and/or machine learning.

15. A non-transitory computer readable medium comprising computer executable instructions configured to cause a computer to perform a method, the method comprising:
determining whether there are one or more collision risk objects in the imaging data that will or are likely to collide with the aircraft based on the imaging data; and
determining a collision location on the aircraft that the one or more collision risk objects will or are likely to collide with.
